# EUROPEAN PATENT SPECIFICATION

(11) **EP 0 417 998 B1**
(45) Date of publication and mention of the grant of the patent: **10.08.1994**
(21) Application number: 90309835.8
(22) Date of filing: 07.09.1990
(51) Int. Cl.: B65D 25/08, B65D 81/32, B29C 49/06

(54) **Fluid dispensing device**
Ausgabevorrichtung für Flüssigkeiten
Dispositif de distribution de fluide

(30) Priority: 15.09.1989 GB 8920947
(43) Date of publication of application: 20.03.1991
(73) Proprietor: Merck & Co., Inc., Rahway New Jersey 07065-0900 (US)
(72) Inventor: Saffron, Ronald G., Nr. Salisbury, Wiltshire (GB)
(74) Representative: Cole, William Gwyn

(56) References cited:
- EP-A- 0 101 594
- EP-A- 0 243 730
- EP-A- 0 315 440
- US-A- 3 603 484
- US-A- 4 419 323

## Description

### BACKGROUND OF THE INVENTION

This invention relates to fluid dispensing devices including a one-piece plastics body in which fluids of different composition can be retained in separate compartments and in which the retained fluids can be mixed in situ as and when required by placing the compartments in communication one with the other. A device of said type is known from EP-A-0 243 730.

More especially, but not exclusively, the invention concerns dispensing devices adapted to contain two medicinal substances which are required to be kept apart until just before administration. Thus, the two substances in a mixed form constitute a desired treatment; however, when mixed the substance may have a limited effective life.

Essentially, dispensers in accordance with this invention are produced from a plastics material, for example low density polythene, and comprise two vertically spaced compartments which are placed in communication one with the other via an orifice positioned between the two compartments. The lower of the two compartments is confined by a plastics shell which can be flexed by the user in a direction towards and away from the shell of the first compartment. A plug valve seats within the orifice to seal the same and can selectively be moved from its seating by movements of the floor of the lower of the two compartments into contact with the lower end of a stem of the plug valve. In use, the dispenser is presented to a patient with the plug valve in its closed position to prevent mixing of the two retained substances. Upon commencement of the treatment, the plug valve is operated manually by the patient and the dispenser either inverted or shaken to cause the substances to mix.

The body of the dispenser can thereafter be squeezed thereby causing a droplet, flow or jet of mixed fluid to be emitted from an outlet nozzle of the dispenser.

Such a dispenser is described and illustrated in European Patent Application No. 0 315 440 (U.S. Serial No. 07/265,745, filed January 11, 1988). In one embodiment of this Application, the upper compartment is generally tubular in shape with a frusto conical diverging neck and the lower compartment is in the form of a bellows.

Hitherto, dispensers such as described have been assembled from a plurality of individual injection and blow moulded plastics components which are subsequently welded together using a welding ring of, for example, a metallic/plastics composition. Manufacturing costs have, consequently, been relatively high and product contamimation has occurred as a consequence of the welding process. Furthermore, because of the presence of a weld line between the neck and tubular body section of the upper compartment, the level of liquid present within the upper compartment has needed to be below the weld line so limiting the volume of liquid able to be contained in the dispenser.

Additionally, the presence of the frusto conical neck to the upper compartment has precluded any section of the main body of the dispenser other than the neck being produced by an injection moulding technique because of the consequent inability to withdraw the core of the injection mould from any point below the neck opening. Thus, manufacture of the main body of such dispensers has involved injection moulding the neck of the upper compartment and blow moulding the parison dependent from the neck to produce the seating for the plug valve and the lower compartment. Thus, the known dispensers include a weld line at the junction between the neck and the upper compartment.

### DETAILED DESCRIPTION OF THE INVENTION

The present invention sets out to provide a dispenser of the type discussed which alleviates these problems and permits the upper compartment and the seating for the plug valve to be produced by injection moulding so ensuring the required dimensional tolerances to provide an effective seal between the two compartments of the dispenser.

According to the present invention in one aspect there is provided a method of producing a dispenser including a plastics body which defines two vertically spaced compartments connected by an orifice closable by a plug valve which cooperates with a seating set in the internal periphery of the orifice to provide a seal between the two compartments, the body section which defines the upper of the two compartments being of tubular construction and the body section which defines the lower of the two compartments being capable of flexing movement towards and away from the mid section of the body in which the orifice between the two compartments is defined, the method comprising the steps of producing by an injection moulding technique a semi-finished product comprising the upper and mid body sections and a parison dependent from the mid body section, and subsequently blow moulding the parison to produce the lower compartment of the dispenser.

In a preferred construction, the plug valve is also produced by an injection moulding technique and includes a stem whose lower end is engaged by upward movement of the floor of the second compartment to lift the valve away from its seating. Preferably, the body of the second compartment is of a bellows-like construction. Other structures having the desired degree of flexing may, however, be employed.

According to the present invention in another aspect there is provided a plastics dispensing device which includes a body comprising two vertically-spaced compartments which can selectively be placed in communication one with the other by operation of a plug valve, the first compartment including a tubular body portion and the second compartment comprising a flexible structure, the two compartments being separated by a seating for the plug valve, the body being produced as a single piece with the first compartment and the valve seating being produced by an injection moulding technique and the second compartment being produced by a blow moulding technique.

In a further aspect, there is provided a plastics dispenser comprising a body including two vertically-spaced internal compartments separated by a selectively operable plug valve which seats within an internal seating of the body, the body of the dispenser having been produced as a single piece by a process which includes injection moulding one of the two compartments and the seating for the plug valve and blow moulding the second of the two compartments separated by a selectively operable plug valve which seats within an internal seating of the body, the body of the dispenser having been produced as a single piece by a process which includes injection moulding one of the two compartments and the seating for the plug valve and blow moulding the second of the two compartments.

In a still further aspect, there is provided a process for producing a dispenser from a plastics material which comprises the step of forming my injection moulding one section of the dispenser to produce a semi-finished product from which depends a parison, and blow moulding the parison to form a second section of the dispenser.

The invention will now be described by way of example only with reference to the accompanying diagrammatic drawings in which:
Figure 1 is a longitudinal cross section taken through a dispenser in accordance with the invention;
Figure 2 is a longitudinal cross section taken through an alternative dispenser in accordance with the invention; and
Figure 3 is a section taken through a dispenser in accordance with the invention during the course of its manufacture.

As mentioned previously a dispensing device in accordance with the invention is designed to retain fluids of different composition in separate compartments until they are to be mixed together at which point a valve is operated to place the separate compartments in communication thereby to enable retained fluids to be mixed in situ one with the other. It will be appreciated that the dimensions of the seal and its seating are critical to prevent mixing of the contents of the two compartments before such mixing is required.

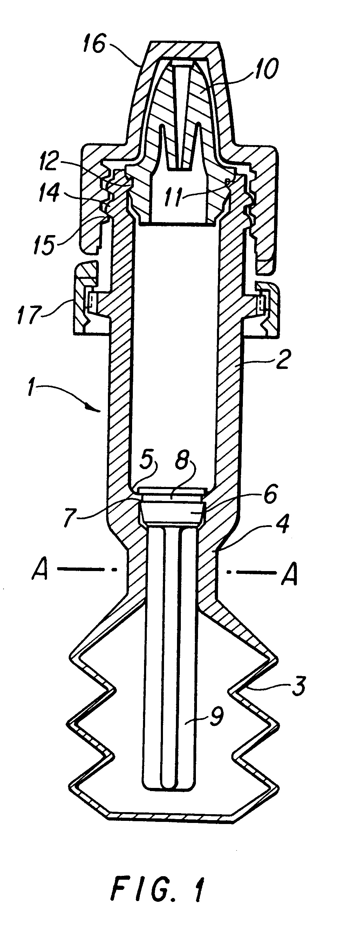

The dispenser illustrated in Figure 1 of the drawings comprises a one-piece plastics hollow body 1 which includes an elongate generally parallel side upper body section 2 and a lower body section 3 in the form of a bellows. The upper body section 2 defines a first compartment of the dispenser and the lower body section 3 defines a second compartment of the dispenser. Interposed between the upper and lower body sections 2, 3 is a waisted mid section 4. In the transition between the upper and mid sections 2, 4 a seating 5 is provided to receive a plug valve 6 which when in position prevents communication between the contents of the compartments defined by body sections 2, 3. The seating 5 is formed with an inwardly protruding annular lip 7 which cooperates with a complementary annular groove 8 formed in the plug valve 6 to provide an effective seal between the two compartments when the plug is located within its seating 5.

As will be seen from the drawing, the plug valve 6 includes an elongate fluted stem 9 which, when in place, is supported over its upper extent by the internal surface of the mid section 4 of the body 1 and is positioned with its lower end a small distance above the floor of the lower section 3.

Secured to the upper rim of the upper section 2 of the dispenser is a nozzle 10. The nozzle 10 is formed with an annular groove 11 which cooperates with a complimentary lip 12 formed on the internal surface of the upper end of the body section 2 to assist location of the nozzle onto the rim of the body section. The upper end of the body section 2 is formed with external screw threads 14 to receive internal threads 15 of a closure cap 16. A tamper-proof collar 17 is carried on the external surface of the body section 2. In use, the entire dispenser may be retained within a separate container (not shown).

In the position illustrated in Figure 1 of the drawings, the plug valve 6 is seated with its seating within the lip 7 within the groove 8; the substances present within the compartments are consequently kept apart.

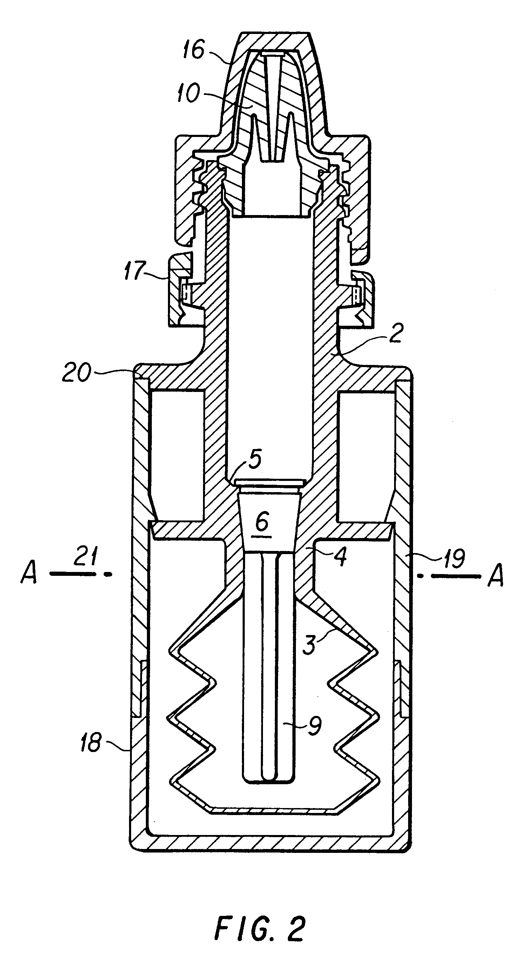

The dispenser illustrated in Figure 2 is similar to that illustrated in Figure 1 and the same reference numerals have been used for integers which are common to both embodiments. The essential differences of the dispenser illustrated in Figure 2 is the presence of a plug 6 of greater length and taper to that illustrated in Figure 1 and the addition of an end cap 18 which clips into a sleeve 19 attached to the dispenser body through radially extending flanges 20, 21. The end cap 18, when in place, prevents inadvertent or accidental depression of the bellows 3 to lift the plug 18 from its seating 5.

In the manufacture of dispensers in accordance with the invention, it is extremely important to ensure that the dimensional tolerances of the seating 5 and for the plug valve 6 are minimized to provide, in use of the dispenser, an effective seal to ensure that mixing of the two substances contained within the dispenser compartments does not occur until the valve is moved from its seating by the user.

To achieve this criterion, the body of the upper and mid sections 2, 4 are produced by an injection moulding technique, the bore of the injection mould extending the full length of the upper and mid sections of the dispenser under production. Injection moulding ensures that the dimensions of the seating for the plug valve are produced to close tolerances to prevent, during use of the device, any mixing of the substances present within the two compartments of the device. Thus, the dispenser is injection moulded to the line indicated at "A-A' in Figures 1 and 2 of the drawings to produce a semi-finished product. The plug valve 6 is also produced by injection moulding to achieve the required dimensional tolerances. Conveniently, the nozzle 10, upper cap 16 and collar 17 are also produced by injection moulding.

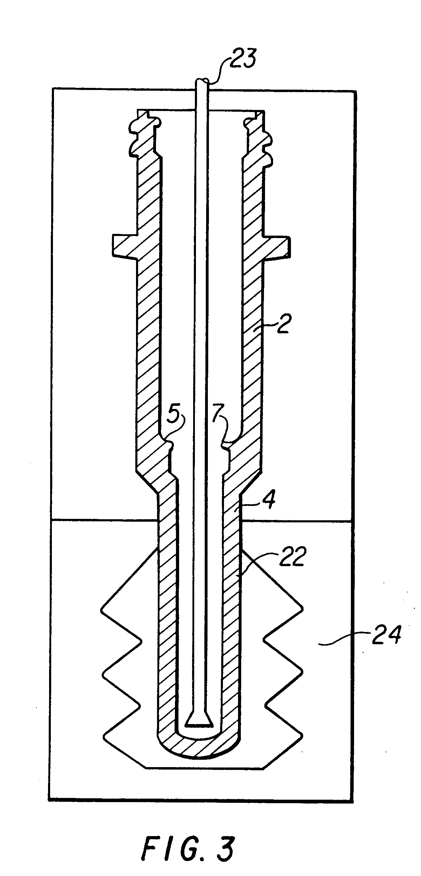

As will be seen from Figure 3 of the drawings, at this stage in the manufacturing process, the semi-finished injection moulded product comprising the upper and mid body sections 2,4 has a plastics parison 22 depending from the lower end of the mid section 4. The upper body and mid sections are cooled and the parison 22 either heated to or retained at the required temperature for blow moulding. As will be seen from the drawing, gas under pressure is injected via a pipe 23 downwardly into the parison 22 to cause it to take up the configuration of the bellows-shaped cavity of a blow mould 24. The body is then removed as single piece from the mould to enable the respective compartments to be filled with the required medicinal products to the levels indicated in broken line, and the plug valve 6, the nozzle 10, the upper cap 16 and the tamper-proof collar 17 to be fitted.

When treatment is to commence and the substances are to be mixed, the floor of the lower bellows-like body section 3 is raised by external pressure (the end cap 18 having firstly been removed if fitted) to engage the lower end of the valve stem thereby to raise the plug valve 6 out of its seating 5 within the mid section 4. The dispenser is then inverted or shaken to mix the until now separated substances. Once mixed the closure cap 16 is removed from the nozzle 10 to permit dispensing of the mixed substances as droplets or as liquid streams or jets.

It will be appreciated that dispensers as described have an upper chamber formed with a bore which is of the same diameter as that of the inside neck opening thereby allowing the body portion above Line "A-A" of Figures 1 and 2 of the drawings to be injection formed and permitting the core of the injection mould to be withdrawn after moulding. Dispensers disclosed in the earlier discussed European Patent Application No. 0 315 440, however, include an upper chamber having an internal diameter larger than the internal diameter of the neck opening. Thus, if the dispenser is to be produced as a one-piece moulding, all that portion of the body below the neck would need to be blow moulded; therefore, the seal area of the dispenser would not be formed to the required dimensional accuracy.

It is to be understood that the foregoing is merely exemplary of dispensing devices in accordance with the invention and that modifications can readily be made thereto without departing from the true scope of the invention. Thus, the lower flexible body section 3 of the dispenser may comprise a flexible bulb instead of a bellows as discussed.

## Claims

1. A method for producing a dispenser including a one-piece plastics body which defines two vertically spaced compartments connected by an orifice closable by a plug valve (6) which cooperates with a seating set in the internal periphery of the orifice to provide a seal between the two compartments, the body section which defines the upper of the two compartments being of tubular construction and the body section which defines the lower of the two compartments being capable of flexing movement towards and away from the mid section of the body in which the orifice between the two compartments is defined, the method comprising the steps of producing by an injection moulding technique a semi-finished product comprising the upper and mid body sections and a parison dependent from the mid body section, and subsequently blow moulding the parison to produce the lower compartment of the dispenser.

2. The method as claimed in Claim 1 wherein the plug valve is also produced by an injection moulding technique and includes a stem whose lower end is engaged by upward movement of the floor of the second compartment to lift the valve away from its seating.

3. The method as claimed in Claim 1 wherein the body of the second compartment is of a bellows-like construction.

4. The method as claimed in Claim 1 wherein blow moulding of the parison is achieved by injecting gas under pressure via a pipe downwardly into the parison to cause the parison to take up the configuration of a suitably shaped mould.

5. A dispensing device which includes a one-piece plastics body (1) comprising two vertically-spaced compartments which can selectively be placed in communication one with the other by operation of a plug valve (6), the first compartment including a tubular body portion (2) and the second compartment comprising a flexible structure (3), the two compartments being separated by a seating (5) for the plug valve (6), the body (1) being produced as a single piece with the first compartment and the valve seating (5) being produced by an injection moulding technique and the second compartment being produced by a blow moulding technique.

6. The dispensing device as claimed in Claim 5 wherein the seating (5) for the plug valve (6) is positioned within a waisted section (4) of the plastics body (1) interposed between the two vertically-spaced compartments.

7. The dispensing device as claimed in Claim 6 wherein the seating (5) is formed with an inwardly protruding annular lip (7) which co-operates with a complementary annular groove (8) formed in the plug valve (6) to provide a seal between the two vertically-spaced compartments.

8. The dispensing device as claimed in Claim 7 wherein the plug valve (6) includes an elongate stem (9) which, when in place in its seating (5), is positioned with its lower end a small distance above the floor of the lower of the two vertically spaced compartments.

## Patentansprüche

1. Verfahren zum Herstellen einer Ausgabevorrichtung, welche einen einteiligen Kunststoffkörper umfaßt, welcher zwei vertikal im Abstand angeordnete Kammern bildet, welche über eine Öffnung verbunden sind, die mittels eines Kegelventils
verschließbar ist, das mit einem Sitz im Innenumfang der Öffnung zusammenarbeitet, um eine Dichtung zwischen den beiden Kammern bereitzustellen, wobei der Körperteil, welcher die obere der beiden Kammern bildet, eine rohrförmige Auslegung hat, und der Körperteil, welcher die untere der beiden Kammern bildet, derart ausgelegt ist, daß eine Biegebewegung in Richtung auf das Mittelteil des Körpers und von diesem weg gestattet ist, in welchem die Öffnung zwischen den beiden Kammern gebildet wird, wobei das Verfahren die Schritte aufweist, gemäß denen mittels Spritzgießtechnik ein Halbzeug hergestellt wird, welches das obere und den mittleren Teil und einen Vorformling in Verbindung mit dem mittleren Körperteil aufweist, und anschließend der Vorformling blasgeformt wird, um die untere Kammer der Ausgabevorrichtung auszubilden.

2. Verfahren nach Anspruch 1, bei dem das Kegelventil ebenfalls mittels einer Spritzgießtechnik hergestellt wird und einen Schaft umfaßt, dessen unteres Ende bei einer Aufwärtsbewegung des Bodens der zweiten Kammer mit diesem zusammenarbeitet, um das Ventil von dem Sitz abzuheben.

3. Verfahren nach Anspruch 1, bei dem der Körper der zweiten Kammer eine balgförmige Auslegung hat.

4. Verfahren nach Anspruch 1, bei dem das Blasformen des Vorformlings dadurch erzielt wird, daß ein Gas unter Druck über ein Rohr in Richtung nach unten in den Vorformling eingespritzt wird, um zu bewirken, daß der Vorformling die Gestalt einer geeignet ausgebildeten Form annimmt.

5. Ausgabevorrichtung, welche einen einstückig ausgelegten Kunststoffkörper (1) umfaßt, welcher zwei vertikal im Abstand angeordnete Kammern aufweist, welche selektiv in kommunizierende Verbindung miteinander durch das Arbeiten eines Kegelventils (6) bringbar sind, wobei die erste Kammer ein rohrförmiges Körperteil (2) umfaßt, und die zweite Kammer eine flexible Konstruktion (3) aufweist, die beiden Kammern durch einen Sitz (5) für das Kegelventil (6) getrennt sind, der Körper (1) als ein einstückiges Teil mit der ersten Kammer und dem Ventilsitz (5) mittels einer Spritzgießtechnik hergestellt wird, und die zweite Kammer mittels einer Blasformtechnik ausgebildet wird.

6. Ausgabevorrichtung nach Anspruch 5, bei der der Sitz (5) für das Kegelventil (6) in einem eingeschnürten Abschnitt (4) des Kunststoffkörpers (1) zwischen den beiden vertikal im Abstand angeordneten Kammern angeordnet ist.

7. Ausgabevorrichtung nach Anspruch 6, bei der der Sitz (5) mit einer nach innen vorspringenden, ringförmigen Lippe (7) ausgebildet ist, welche mit einer komplementär hierzu ausgebildeten, ringförmigen Ausnehmung (8) zusammenarbeitet, welche in dem Kegelventil (6) ausgebildet ist, um einen dichten Abschluß zwischen den beiden vertikal im Abstand angeordneten Kammern bereitzustellen.

8. Ausgabevorrichtung nach Anspruch 7, bei der das Kegelventil (6) einen länglichen Schaft (9) umfaßt, welcher bei seiner Anordnung an dem Sitz (5) mit seinem unteren Ende in einem kleinen Abstand oberhalb des Bodens der unteren der beiden vertikal im Abstand angeordneten Kammern angeordnet ist.

## Revendications

1. Procédé de fabrication d'un distibuteur comportant un corps plastique monopièce qui définit deux compartiments espacés verticalement, reliés par un orifice que peut obturer un boisseau cylindrique (6) qui coopère avec un siège placé dans la périphérie intérieure de l'orifice pour réaliser une étanchéité entre les deux compartiments, la section du corps qui définit celui des deux compartiments qui est le compartiment supérieur étant de contruction tubulaire et la section du corps qui définit celui des deux compartiments qui est le compartiment inférieur pouvant effectuer un mouvement de flexion en direction de la section médiane du corps, et en s'en écartant, dans laquelle est défini l'orifice entre les deux compartiments, le procédé comportant les étapes consistant à fabriquer, par une technique de moulage par injection, un produit semi-fini comprenant la section supérieure et la section médiane du corps ainsi qu'une préforme suspendue à la section médiane du corps et à mouler ensuite par soufflage la préforme pour obtenir le compartiment inférieur du distributeur.

2. Procédé selon la revendication 1, dans lequel le boisseau est également obtenu par une technique de moulage par injection et comporte une tige dont l'extrémité inférieure est actionnée par le mouvement, vers le haut, du fond du second compartiment pour lever le boisseau et l'écarter de son siège.

3. Procédé selon la revendication 1, dans lequel le corps du second compartiment est d'une construction de type soufflet.

4. Procédé selon la revendication 1, dans lequel le moulage, par soufflage, de la préforme s'obtient en injectant, par une conduite, du gaz sous pression vers le bas dans la préforme pour amener la préforme à prendre la configuration d'un moule de forme convenable.

5. Dispositif de distribution qui comporte un corps plastique monopièce (1) comprenant deux compartiments, espacés verticalement, que l'on peut sélectivement mettre en communication l'un avec l'autre en maoeuvrant un boisseau (6), le premier compartiment incluant une portion de corps tubulaire (2) et le second compartiment incluant une structure flexible (3), les deux compartiments étant séparés par un siège (5) pour le boisseau (6), le corps (1) étant obtenu sous forme d'une pièce unique, le premier compartiment et le siège (5) du boisseau étant obtenus par une technique de moulage par injection et le second compartiment étant obtenu par une technique de moulage par soufflage.

6. Dispositif de distribution selon la revendication 5, dans lequel le siège (5) pour le boisseau (6) est situé à l'intérieur d'une section rétrécie (4) du corps plastique (1) interposée entre les deux compartiments verticalement espacés.

7. Dispositif de distribution selon la revendication 6, dans lequel le siège (5) est formé avec une lèvre annulaire (7) qui déborde vers l'intérieur et qui coopère avec une rainure annulaire complémentaire (8) formée dans le boisseau (6) pour réaliser une étanchéité entre les deux compartiments verticalement espacés.

8. Dispositif de distribution selon la revendication 7, dans lequel le boisseau (6) comporte une tige (9) de forme allongée qui, lorsqu'il est en place dans son siège (5), est située avec son extrémité inférieure à une faible distance au-dessus du fond de celui des deux compartiments verticalement espacés qui est le compartiment inférieur.
